# DEMANDE DE BREVET EUROPEEN

(11) **EP 1 734 799 A1**
(43) Date de publication de la demande: **20.12.2006**
(21) Numéro de dépôt: 05105143.1
(22) Date de dépôt: 13.06.2005
(51) Int. Cl.: H05K 3/12

(54) **Transpondeur passif compact**

(71) Demandeur: MBBS Holding SA, CH-2035 Corcelles (CH)
(72) Inventeur: Ballif, Julien, 1040, Villars-le-Terroir (CH); Bui, Ngoc Chau, 2046, Fontaines (CH)
(74) Mandataire: GLN

(57) **Abrégé**

L'invention concerne un transpondeur passif du type comportant une bobine (10) constituée d'un fil et formant une antenne destinée à interagir avec un rayonnement électromagnétique transportant de l'information, et un circuit électronique (12), comportant deux contacts, relié à la bobine (10), et agencé pour traiter cette information. Le circuit électronique est disposé en sur-épaisseur de la bobine, soit directement sur celle-ci, soit sur un substrat du type PCB disposé lui-même sur la bobine.

## Description

L'invention concerne le domaine de l'électronique. Elle porte plus précisément sur un transpondeur passif encore appelé tag, ou étiquette électronique, destiné à équiper des instruments ou dispositifs devant être identifiés.

Le tag est généralement un dispositif passif comportant un circuit électronique tel qu'un circuit intégré, ou puce, et une antenne formée d'une bobine dont le fil est soudé en ses deux extrémités à deux plages de contact sur le circuit intégré. L'antenne est destinée à capter un rayonnement électromagnétique émis par un module lecture/écriture, et à transmettre au circuit intégré l'énergie et l'information qu'il transporte. Le circuit intégré traite l'information reçue et envoie en retour une information transmise par la même antenne. Le tag est ainsi capable de recevoir, traiter, communiquer, et éventuellement enregistrer des données, rendant ainsi possible la traçabilité d'un dispositif qui en serait muni. Le tag équipe, par exemple, des cartes d'identification, des produits durant leur cycle complexe de fabrication, des articles devant être protégés contre la falsification, des pièces mécaniques dont l'historique doit être connu, ou des instruments chirurgicaux devant subir des cycles de stérilisation à haute température. Il est souvent moulé dans du plastique afin de le protéger des contraintes mécaniques.

Dans un mode de réalisation bien connu de l'homme de métier, le circuit intégré est disposé sensiblement sur le même plan que la bobine, à l'intérieur ou à l'extérieur de celle-ci. Ce mode de réalisation est toutefois peu adapté aux tags miniatures, de dimensions de l'ordre de trois à cinq millimètres, destinés à être intégrés dans des dispositifs de petite taille. En effet, la disposition à l'extérieur de la bobine d'une puce grande par rapport à cette dernière, occupe une surface considérable, ce qui implique un encombrement important. De même, la disposition à l'intérieur de la bobine nécessite l'emploi de bobines de diamètre important, rendant le tag encombrant.

L'invention pallie cet inconvénient, en proposant un tag compact, dont la disposition est adaptée à des bobines et des circuits intégrés de petite taille.

Plus précisément, l'invention concerne un transpondeur du type comportant :
- une bobine constituée d'un fil et formant une antenne destinée à interagir avec un rayonnement électromagnétique transportant de l'énergie et de l'information, et
- un circuit électronique, comportant deux contacts, relié à la bobine, et agencé pour traiter l'information.

Selon l'invention, le circuit électronique est disposé en sur-épaisseur de la bobine.

Avantageusement, le circuit électronique est disposé sur ladite bobine, et chaque extrémité du fil est connectée à l'un des contacts.

Par ailleurs, on notera que le fait de souder directement les fils de la bobine au circuit intégré peut poser quelques problèmes. Si le fil qui constitue la bobine est très fin, il est fragile et l'opération de soudure est alors délicate. Une augmentation de son diamètre permet de résoudre ce problème, mais au dépend de la miniaturisation de l'ensemble.

L'invention permet aussi de réaliser des tags miniatures exempts de ces inconvénients en proposant une structure faisant intervenir la technologie PCB (Printed Circuit Board).

De façon plus précise, le transpondeur selon l'invention présente, avantageusement, les caractéristiques suivantes :
- Un substrat du type circuit imprimé comportant au moins deux bornes de contact est disposé entre ladite bobine et ledit circuit électronique.
- Le substrat du type circuit imprimé comporte quatre bornes de contact reliées deux à deux par une piste conductrice.
- Chaque extrémité du fil est connectée à l'une des quatre bornes du substrat et chacun des contacts est connecté à l'une des quatre bornes du substrat, de sorte que chacune des extrémités du fil est reliée électriquement respectivement à l'un des contacts du circuit intégré.
- Les contacts sont connectés aux bornes du substrat par l'intermédiaire de deux fils ou de deux bumps.

Le tag est, par ailleurs, souvent employé dans des milieux chimiquement agressifs, et exposé à de fortes contraintes mécaniques et/ou thermiques, puisqu'il est susceptible d'équiper des dispositifs subissant des traitements de toutes sortes, tels que des nettoyages ou des stérilisations. Afin de le protéger de manière efficace de son environnement, il est avantageusement muni d'un boîtier en matière plastique dans lequel est fixée la bobine. Le boîtier est avantageusement muni d'un couvercle.

Pour assurer une protection encore plus efficace, une double encapsulation est proposée, le boîtier en matière plastique étant alors lui-même disposé à l'intérieur d'un boîtier en métal muni d'un couvercle garantissant l'étanchéité de l'ensemble.

D'autres caractéristiques de l'invention ressortiront de la description qui suit, faite en regard du dessin annexé, dans lequel :
- les figures 1, 2, 3, 4 et 5 représentent, schématiquement, différents modes de réalisation d'un tag selon l'invention, vus en coupe et de dessus.
- les figures 6 et 7 illustrent deux modes d'encapsulation destinés à assurer une protection dans des milieux plus ou moins agressifs.

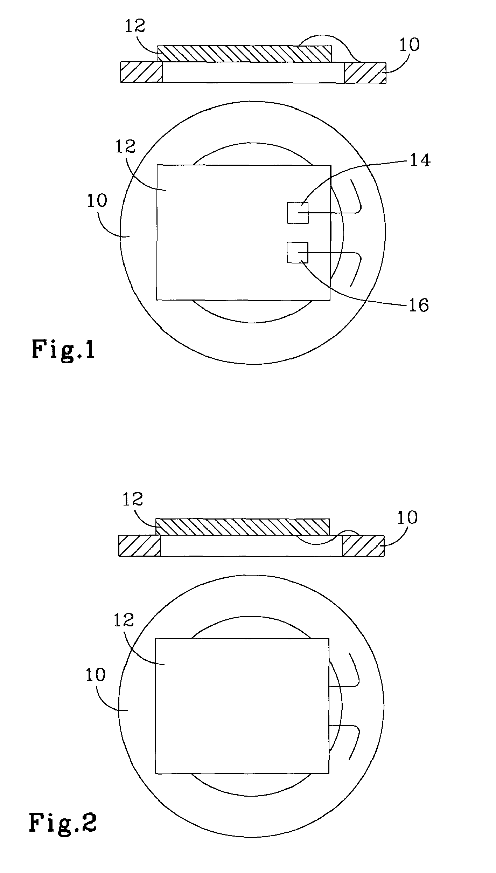

Le tag représenté en figure 1 comporte une bobine annulaire plate 10 à section rectangulaire, constituée d'un fil isolé enroulé sur lui-même, sans support. Elle est destinée à traiter un signal électromagnétique émis par un module lecture/écriture non représenté, bien connu de l'homme du métier.

Sur la bobine 10 est disposé un circuit intégré 12, qui s'inscrit dans le cercle extérieur de la bobine. La face active du circuit 12 se trouve du côté extérieur à la bobine.

Les deux extrémités du fil électrique constituant la bobine sont soudées respectivement à deux plages de contacts 14 et 16, ou pads, situés sur le circuit intégré 12. Ce dernier est collé à la bobine 10 à l'aide d'un point d'une colle résistante à des hautes températures telle que la Loctite 5248. Ainsi disposés l'un sur l'autre, la bobine 10 et le circuit intégré 12 occupent une surface nettement inférieure à la surface qu'ils occuperaient selon un mode de réalisation traditionnel, sans pour autant affecter le bon fonctionnement du tag, ainsi que le montre la pratique.

Cet agencement du tag peut être réalisé par deux méthodes de fabrication différentes. Dans une première variante, l'opération de soudage est effectuée alors que le circuit intégré 12 est disposé à côté de la bobine 10. Il est ensuite retourné et collé sur la bobine 10.

Dans une deuxième variante, le circuit intégré 12 est collé sur la bobine 10, puis soudé à celle-ci. Dans cette variante un support est utilisé pour maintenir le tag pendant l'opération de soudage.

Le tag représenté en figure 2 diffère du précédent en ce que la face active du circuit intégré 12 est dirigée vers la bobine 10. Cette disposition du tag est obtenue par soudage du fil au circuit intégré 12 disposé à côté de la bobine 10, puis retournement du circuit 12 sur cette dernière après soudage.

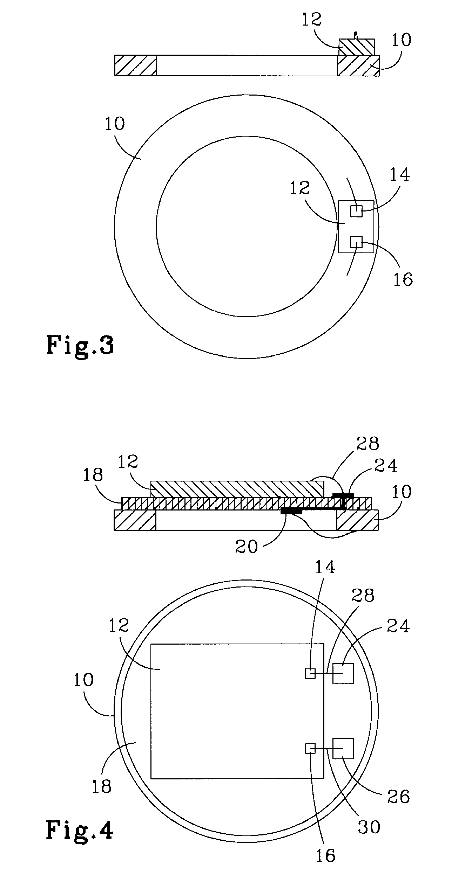

La figure 3 illustre un tag en anneau comportant une bobine 10 à section rectangulaire, et un circuit intégré 12, de petites dimensions en regard des dimensions de la bobine 10, de sorte qu'il repose entièrement sur les spires de celle-ci. Les deux extrémités du fil sont soudées sur les plages 14 et 16 du circuit intégré 12, sans retournement de celui-ci après l'opération de soudage, de telle sorte que la surface active du circuit se trouve du coté opposé à la bobine .

Un autre mode de réalisation avantageux présenté en figure 4, permet d'augmenter la résistance mécanique des connexions entre la bobine 10 et le circuit intégré 12. Dans cette variante, un substrat 18 formé d'un PCB (Printed Circuit Board) est inséré entre le circuit intégré 12 et la bobine 10, et collé à cette dernière. Le fil de la bobine 10 est soudé en ses deux extrémités, à deux bornes 20 et 22 disposées sur la face inférieure du substrat 18. Ces bornes 20 et 22 sont elles-mêmes connectées, par l'intermédiaire de pistes métalliques, respectivement à deux autres bornes 24 et 26 situées sur la face supérieure du substrat 18. Le circuit intégré 12 est connecté aux deux bornes supérieures 24 et 26 du PCB 18 grâce à deux fils 28 et 30 soudés, à l'une de leurs extrémités, aux plages de contact 14 et 16 et, à l'autre de leurs extrémités, aux bornes 24 et 26. De la sorte, la connexion entre la bobine 10 et le circuit intégré 12 est assurée.

Ce mode de réalisation est avantageux par rapport aux modes de réalisation présentés en figure 1 à 3, puisqu'il permet :
- d'augmenter la résistance mécanique des connexions entre la bobine 10 et le circuit intégré 12, car ces connexions sont assurées en grande partie par les pistes métalliques du PCB, et
- de choisir le type de fils 28 et 30 assurant la connexion entre le PCB 18 et le circuit intégré 12 indépendamment du type de fil de la bobine.

En effet, le fil de la bobine 10 a un diamètre typiquement compris entre 20 et 28 µm. Ce fil, de par ses dimensions, est fragile et ne se prête pas bien à des opérations de soudage et à de longues connexions entre la bobine 10 et le circuit intégré 12. A cet égard, les fils de connexion 28 et 30, de diamètre typiquement 50 µm, sont beaucoup plus résistants. En outre, l'insertion d'un substrat PCB entre le circuit intégré 12 et la bobine 10 confère au tag de la rigidité, sans pour autant affecter son fonctionnement.

Dans une variante non représentée de ce mode de réalisation, les deux paires de bornes 20, 22 et 24, 26 ainsi que les pistes métalliques de connexions sont placées sur la face supérieure du substrat PCB 18. La disposition du circuit intégré 12 et de la bobine 10 est, par contre, inchangée. Le fil de la bobine 10 se connecte aux bornes 20 et 22, en contournant le substrat PCB 18. Cette alternative simplifie la fabrication du PCB et réduit son coût. Par contre, elle est mécaniquement moins favorable car elle a l'inconvénient d'avoir des fils plus longs pour souder la bobine 10 aux bornes 20 et 22. Un mode de réalisation apparenté à ce dernier, consiste à utiliser un substrat PCB 18 ne comportant que deux bornes 24 et 26 en lieu et place de quatre bornes reliées deux à deux. Chaque borne comporte alors deux soudures.

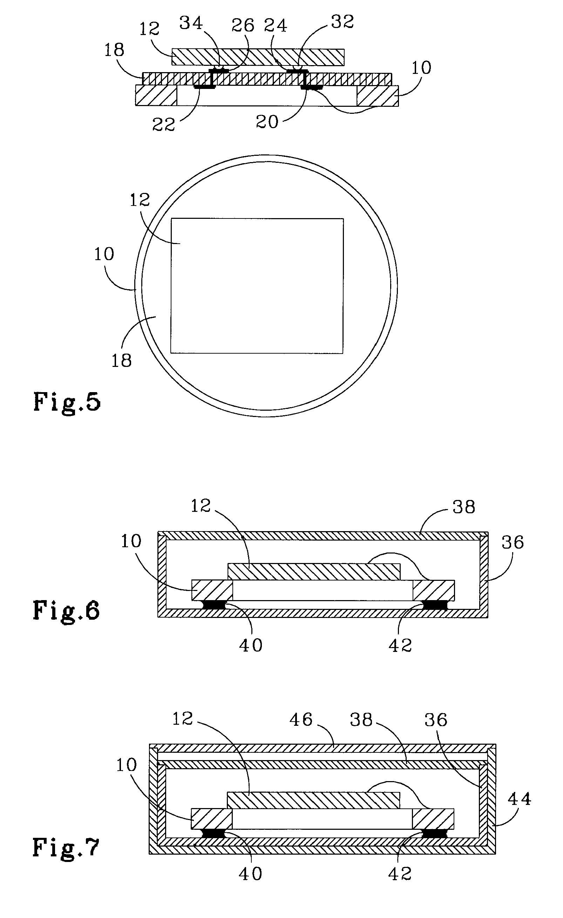

Afin d'éviter le retournement du circuit intégré 12 sur la bobine 10, et la fragilisation des fils de soudure qui en résulte, un cinquième mode de réalisation est proposé en figure 5, en alternative au mode de réalisation proposé en figure 2. Cette variante fait également intervenir un substrat PCB 18, mais diffère de la précédente en ce que le circuit intégré 12 est disposé face active dirigée vers le substrat PCB 18. A cet effet, le circuit intégré 12 est muni de bumps 32 et 34, formant ses contacts, et connectés aux bornes supérieures 24 et 26 du substrat PCB 18 par la technologie appelée flip-chip. De la sorte, la connexion entre la bobine 10 et le circuit intégré 12 est réalisée par l'intermédiaire du substrat PCB 18. Les fils de connexions 28 et 30 sont supprimés et l'opération délicate de retournement de la puce est évitée.

Comme précédemment, une variante de ce mode de réalisation consiste à disposer les deux paires de bornes 20, 22 et 24, 26 ainsi que les pistes métalliques de connexions sur la face supérieure du substrat PCB 18.

En figure 6, un tag réalisé selon l'un des modes de réalisation présenté ci-dessus, comporte, en outre, un boîtier de protection en plastique constitué d'une boîte cylindrique 36 et d'un couvercle plat 38 rendu solidaire de la boîte 36 par collage, ou soudage aux ultrasons. Le matériau plastique utilisé, tel que du polysulfure de phénylène (PPS), ou du polyetheretherketone (PEEK), doit être résistant au minimum à des températures allant jusqu'à 220°C. L'épaisseur des parois est de l'ordre de 0.2 à 0.4 mm, de sorte que le tag présente une rigidité suffisante pour résister à de petites contraintes mécaniques lors de sa manipulation et de son utilisation.

La bobine 10 est fixée à l'intérieur de la boîte 36 à l'aide de deux points 40 et 42 d'une colle résistant aux hautes températures. Ce mode de faire se distingue du mode traditionnel par moulage dans de la résine. De la sorte, le tag résiste beaucoup mieux à des cycles en température, sans générer de contraintes mécaniques dues à des coefficients de dilatation thermique différents entre résine et fil. Dans une variante simplifiée de ce mode de réalisation, la boîte 36 n'est pas munie de couvercle.

Un autre mode de protection représenté en figure 7, permet de soumettre des tags à des environnements agressifs à la fois thermiquement mécaniquement, et chimiquement. Dans ce mode de réalisation, le tag est formé d'une bobine 10, d'un circuit intégré 12, et d'un boîtier plastique du type de celui présenté en figure 6, avec ou sans couvercle 38, lui-même disposé dans un boîtier métallique amagnétique, par exemple en acier inoxydable ou titane, fermé hermétiquement.

Le boîtier est formé d'une coupelle 44, réalisée par décolletage, et d'un couvercle 46 soudé à la coupelle 44, par un procédé connu de l'homme de métier, avantageusement par soudage laser. Un tel tag résiste dans une très large plage aux cycles thermiques, aux chocs, vibrations, agents chimiques et contraintes mécaniques. En outre, le boîtier en matière plastique 36 sert à isoler électriquement l'ensemble formé de la bobine 10 et du circuit intégré 12 et à empêcher qu'ils ne touchent le boîtier métallique.

## Revendications

1. Transpondeur passif du type comportant :
- une bobine (10) constituée d'un fil et formant une antenne destinée à interagir avec un rayonnement électromagnétique transportant de l'énergie et de l'information, et
- un circuit électronique (12), comportant deux contacts (14, 16), relié à ladite bobine (10), et agencé pour traiter ladite information,
**caractérisé en ce que** ledit circuit électronique (12) est disposé en sur-épaisseur de ladite bobine (10).

2. Transpondeur selon la revendication 1, **caractérisé en ce que** ledit circuit électronique (12) est disposé sur ladite bobine (10), et **en ce que** chaque extrémité dudit fil est connectée à l'un desdits contacts (14, 16).

3. Transpondeur selon la revendication 1, **caractérisé en ce qu'**un substrat (18) du type circuit imprimé comportant au moins deux bornes de contact (24, 26) est disposé entre ladite bobine (10) et ledit circuit électronique (12).

4. Transpondeur selon revendication 3, **caractérisé en ce que** ledit substrat (18) du type circuit imprimé comporte quatre bornes de contact (20, 22, 24, 26) reliées deux à deux par une piste conductrice.

5. Transpondeur selon la revendication 4, **caractérisé en ce que** chaque extrémité dudit fil est connectée à l'une des quatre bornes (20, 22, 24, 26) dudit substrat (18) et chacun desdits contacts (14, 16) est connecté à l'une des quatre bornes (20, 22, 24, 26) dudit substrat (18), de sorte que chacune des extrémités dudit fil est reliée électriquement respectivement à l'un des contacts dudit circuit intégré.

6. Transpondeur selon la revendication 5, **caractérisé en ce que** lesdits contacts (14, 16) sont connectés aux dites bornes (24, 26) par l'intermédiaires de deux fils (28, 30).

7. Transpondeur selon la revendication 5, **caractérisé en ce que** lesdits contacts (14, 16) sont connectés aux dites bornes (24, 26) par l'intermédiaires de deux bumps (32, 34).

8. Transpondeur selon l'une des revendications 1 à 7, **caractérisé en ce qu'**il comporte, en outre, un boîtier en matière plastique dans laquelle est fixée la bobine (10), et, muni ou non d'un couvercle (38).

9. Transpondeur selon la revendication 8 **caractérisé en ce que** ledit boîtier en matière plastique est lui-même disposé à l'intérieur d'un boîtier en métal formé d'une coupelle (44) et d'un couvercle (46) soudés hermétiquement l'un à l'autre.
